(19) Europäisches Patentamt
European Patent Office
Office européen des brevets

(11) **EP 3 786 115 B1**

(12) **EUROPEAN PATENT SPECIFICATION**

(45) Date of publication and mention
of the grant of the patent:
**30.11.2022 Bulletin 2022/48**

(21) Application number: **19792400.4**

(22) Date of filing: **24.04.2019**

(51) International Patent Classification (IPC):
*C01F 11/18* (2006.01)    *C03C 1/00* (2006.01)
*C09C 1/02* (2006.01)    *H01M 4/00* (2006.01)

(52) Cooperative Patent Classification (CPC):
**C01F 11/188;** C01P 2004/04; C01P 2004/54;
C01P 2006/12; C01P 2006/80

(86) International application number:
**PCT/JP2019/017397**

(87) International publication number:
**WO 2019/208622 (31.10.2019 Gazette 2019/44)**

(54) **BARIUM CARBONATE PRODUCTION METHOD AND CORRESPONDING PRODUCT**

VERFAHREN ZUR HERSTELLUNG VON BARIUMCARBONAT UND ENTSPRECHENDES PRODUKT

PROCÉDÉ DE PRODUCTION DE CARBONATE DE BARYUM ET PRODUIT CORRESPONDANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.04.2018 JP 2018085397**

(43) Date of publication of application:
**03.03.2021 Bulletin 2021/09**

(73) Proprietor: **Sakai Chemical Industry Co., Ltd.
Sakai-shi, Osaka 590-8502 (JP)**

(72) Inventors:
• **TSUJITA, Hiroshi**
Iwaki-shi, Fukushima 971-8183 (JP)
• **NISHIDA, Hiroyuki**
Iwaki-shi, Fukushima 971-8183 (JP)
• **OGATA, Hironobu**
Iwaki-shi, Fukushima 971-8183 (JP)

(74) Representative: **Cabinet Beau de Loménie
158, rue de l'Université
75340 Paris Cedex 07 (FR)**

(56) References cited:
WO-A1-2008/111611    WO-A1-2013/018742
JP-A- H11 514 961    JP-A- 2007 176 789
JP-A- 2008 266 134    US-B1- 6 479 029

EP 3 786 115 B1

**Description**

TECHNICAL FIELD

The present invention relates to a method for producing barium carbonate. Specifically, the present invention relates to a method for producing barium carbonate that can be suitably used in various fields including the field of electronic materials.

BACKGROUND ART

High purity barium carbonate is used in various fields such as optical glass, glazes, ferrite, pigments, dyes, and fluorescent materials. Notably in the field of electronic materials, fine powder of high purity barium carbonate is used to reduce the size and layer thickness of multilayer ceramic capacitors (MLCC).

An exemplary known fine high purity barium carbonate is a barium carbonate having a specific surface area of 30 $m^2/g$ to 40 $m^2/g$. Such a fine barium carbonate is produced by adding citric acid as a crystal growth inhibitor to the reaction system to inhibit the growth of particles.

Along with a decrease in size and an increase in capacity of MLCC these days, thinner or a larger number of dielectric layers are stacked in MLCC. Finer barium carbonate is thus desired. However, making it finer by adding citric acid is insufficient. To overcome the problem, methods to obtain much finer barium carbonate have been studied. For example, a known method involves using a combination of gluconic acid or a derivative thereof and citric acid to produce barium carbonate having a specific surface area of larger than 40 $m^2/g$ (see, Patent Literature 1). Also known is a method for producing rod-like barium carbonate powder which involves heating an aqueous slurry containing acicular barium carbonate powder at 50°C or higher (see, Patent Literature 2). Another example is a method involving: feeding carbon dioxide gas into an aqueous solution or suspension of a hydroxide of barium for carbonation; grinding the resulting carbonate with ceramic beads in an aqueous medium; and drying the ground carbonate (see, Patent Literature 3).

CITATION LIST

- Patent Literature

   Patent Literature 1: JP 2015-044744 A
   Patent Literature 2: JP 2009-114015 A
   Patent Literature 3: WO2008/111612

SUMMARY OF INVENTION

- Technical Problem

As described earlier, the use of a combination of gluconic acid and/or a derivative thereof and citric acid is known as a technique to produce barium carbonate finer than that obtained by adding citric acid alone. Unfortunately, the technique requires a large amount of gluconic acid and/or a derivative thereof, specifically 50 mol% more than the amount of barium. Furthermore, the gluconic acid and/or a derivative thereof mostly flow(s) out in the production process such as water washing, causing a high BOD load in waste water. From the economic and green chemistry points of view, development of a more efficient production method has been awaited.

In view of the current state of the art described above, the present invention aims to provide a method for economically producing fine barium carbonate having a specific surface area of larger than 45 $m^2/g$ with little burden on the environment.

- Solution to Problem

The inventors intensively studied for developing a method for economically producing fine barium carbonate with little burden on the environment. As a result, they have found that fine barium carbonate having not only a specific surface area of larger than 45 $m^2/g$ but also a small aspect ratio can be produced by a production method including the three steps of: adding citric acid and/or a salt thereof to at least one barium compound selected from the group consisting of barium hydroxide, barium chloride, barium nitrate, barium acetate, or barium oxide; reacting with carbon dioxide and/or a carbonate compound; and adding at least one selected from a polybasic carboxylic acid having a specific structure, an acid anhydride thereof, or a salt thereof, wherein the citric acid and/or a salt thereof and the polybasic carboxylic acid, an acid anhydride thereof, or a salt thereof are used in a specific ratio. This method is economically more efficient and has less burden on the environment than the method using a combination of gluconic acid and/or a derivative thereof and citric acid. Accordingly, the present invention was completed.

Specifically, the method for producing barium carbonate of the present invention includes:

(a) adding citric acid and/or a salt thereof to at least one barium compound selected from the group consisting of barium hydroxide, barium chloride, barium nitrate, barium acetate, or barium oxide;
(b) reacting with carbon dioxide and/or a carbonate compound; and
(c) adding at least one selected from a polybasic carboxylic acid, an acid anhydride thereof, or a salt thereof, the polybasic carboxylic acid being represented by the following formula (1):

$$HOOC\text{-}X\text{-}(COOH)_n \qquad (1)$$

wherein X is a divalent or trivalent linking group, the linking group being a C1 or C2 saturated hydrocarbon group, a C2 unsaturated hydrocarbon group, or a group derived from a benzene ring, each optionally containing a hydroxy group as a substituent; and n is 1 or 2,

a mol% A of the added (a) citric acid and/or a salt thereof and a mol% B of the added (c) at least one selected from a polybasic carboxylic acid represented by the formula (1), an acid anhydride thereof, or a salt thereof, each relative to 100 mol% of barium atoms in the barium compound, satisfying the following expressions (I) and (II):

$$6.0 \leq A + B \leq 16 \quad (I)$$

$$0.01 \leq A/B \leq 7.0 \quad (II).$$

The amount of the (a) citric acid and/or a salt thereof relative to 100 mol% of barium atoms in the barium compound is preferably 0.1 to 9.0 mol%.

The (b) carbon dioxide and/or a carbonate compound are/is preferably added after the (a) citric acid and/or a salt thereof and the (c) at least one selected from a polybasic carboxylic acid represented by the formula (1), an acid anhydride thereof, or a salt thereof are added to the barium compound.

The barium compound is preferably barium hydroxide.

The polybasic carboxylic acid represented by the formula (1) is preferably any of tartaric acid, succinic acid, malic acid, maleic acid, malonic acid, and trimellitic acid.

The present invention also relates to a barium carbonate composition containing:

barium carbonate;
citric acid and/or a salt thereof; and
at least one selected from a polybasic carboxylic acid, an acid anhydride thereof, or a salt thereof, the polybasic carboxylic acid being represented by the following formula (1):

$$HOOC\text{-}X\text{-}(COOH)_n \qquad (1)$$

wherein X is a divalent or trivalent linking group, the linking group being a C1 or C2 saturated hydrocarbon group, a C2 unsaturated hydrocarbon group, or a group derived from a benzene ring, each optionally containing a hydroxy group as a substituent; and n is 1 or 2,
the barium carbonate having a specific surface area determined by the BET method of larger than 45 $m^2/g$ and having a particle aspect ratio of 1 to 1.50.

A ratio of a total of a number of moles of the citric acid and/or a salt thereof and a number of moles of the at least one selected from a polybasic carboxylic acid represented by the formula (1), an acid hydride thereof, or a salt thereof relative to a number of moles of barium atoms in the barium carbonate composition is preferably 6.0 to 16.0 mol%.

- Advantageous Effects of Invention

The method for producing barium carbonate of the present invention is a method of economically producing fine barium carbonate having a small aspect ratio with little burden on the environment without using a large amount of a crystal growth inhibitor.

The barium carbonate composition of the present invention contains fine barium carbonate with a small aspect ratio. The composition can be used in various applications, especially suitably for electronic materials such as multilayer ceramic capacitors (MLCC).

BRIEF DESCRIPTION OF DRAWINGS

Fig. 1 is a schematic diagram of a reactor used in production of barium carbonate in Example 1 and other examples.
Fig. 2 is an electron micrograph of barium carbonate produced in Example 1.
Fig. 3 is an electron micrograph of barium carbonate produced in Example 2.
Fig. 4 is an electron micrograph of barium carbonate produced in Example 3.
Fig. 5 is an electron micrograph of barium carbonate produced in Example 4.
Fig. 6 is an electron micrograph of barium carbonate produced in Example 5.
Fig. 7 is an electron micrograph of barium carbonate produced in Example 6.
Fig. 8 is an electron micrograph of barium carbonate produced in Example 7.
Fig. 9 is an electron micrograph of barium carbonate produced in Example 8.
Fig. 10 is an electron micrograph of barium carbonate produced in Example 9.
Fig. 11 is an electron micrograph of barium carbonate produced in Example 10.
Fig. 12 is an electron micrograph of barium carbonate produced in Example 11.
Fig. 13 is an electron micrograph of barium carbonate produced in Example 12.
Fig. 14 is an electron micrograph of barium carbonate produced in Example 13.
Fig. 15 is a schematic diagram of a reactor used in production of barium carbonate in Example 14.
Fig. 16 is an electron micrograph of barium carbonate produced in Example 14.
Fig. 17 is an electron micrograph of commercially available barium carbonate BW-KH30.
Fig. 18 is an electron micrograph of barium carbonate produced in Comparative Example 1.
Fig. 19 is an electron micrograph of barium carbonate produced in Comparative Example 2.
Fig. 20 is an electron micrograph of barium carbonate produced in Comparative Example 3.
Fig. 21 is an electron micrograph of barium carbonate produced in Comparative Example 4.
Fig. 22 is an electron micrograph of barium carbonate produced in Comparative Example 5.
Fig. 23 is an electron micrograph of barium carbonate produced in Comparative Example 6.

DESCRIPTION OF EMBODIMENTS

Preferred modes of the present invention are specifically described below. The present invention is not limited to the description below, and suitable modifications may be made without departing from the gist of the present invention.

1. Method for producing barium carbonate

The method for producing barium carbonate of the present invention includes:

(a) adding citric acid and/or a salt thereof to at least one barium compound selected from the group consisting of barium hydroxide, barium chloride, barium nitrate, barium acetate, or barium oxide;
(b) reacting with carbon dioxide and/or a carbonate compound; and
(c) adding at least one selected from a polybasic carboxylic acid, an acid anhydride thereof, or a salt thereof (hereinafter referred to as a polybasic carboxylic acid represented by the formula (1) or the like). The polybasic carboxylic acid is represented by the following formula (1):

$$HOOC\text{-}X\text{-}(COOH)_n \qquad (1)$$

wherein X is a divalent or trivalent linking group, the linking group being a C1 or C2 saturated hydrocarbon group, a C2 unsaturated hydrocarbon group, or a group derived from a benzene ring, each optionally containing a hydroxy group as a substituent; and n is 1 or 2.

A mol% A of the added (a) citric acid and/or a salt thereof and a mol% B of the added (c) at least one selected from a polybasic carboxylic acid represented by the formula (1), an acid anhydride thereof, or a salt thereof, each relative to 100 mol% of barium atoms in the barium compound, satisfy the following expressions (I) and (II):

$$6.0 \leq A + B \leq 16 \quad (I)$$

$$0.01 \leq A/B \leq 7.0 \quad (II).$$

The method for producing barium carbonate of the present invention can provides fine barium carbonate with a small aspect ratio. Unlike the method according to Patent Literature 1 using a combination of gluconic acid and/or a derivative thereof and citric acid, the method does not require a large amount of a crystal growth inhibitor. Therefore, the method is economically advantageous and has little burden on the environment because the amount of waste liquid is small.

In the method for producing barium carbonate of the present invention, one compound or two or more compounds may be used as the barium compound or as the polybasic carboxylic acid represented by the formula (1) or the like.

The "group derived from a benzene ring" in X representing a divalent or trivalent linking group in the formula (1) refers to a divalent or trivalent group formed by removing two or three hydrogen atoms from a benzene ring.

The barium compound used in the method for producing barium carbonate of the present invention may be any water-soluble barium compound, and it may include one of or two or more of barium hydroxide, barium chloride, barium nitrate, barium acetate, and barium oxide. Barium hydroxide or barium oxide is preferred among these, with barium hydroxide being more preferred.

With regard to the amount of the citric acid and/or a salt thereof and the amount of the polybasic carboxylic acid represented by the formula (1) or the like used in the method for producing barium carbonate of the present invention, the mol% A of the added (a) citric acid and/or a salt thereof and the mol% B of the added (c) at least one selected from a polybasic carboxylic acid represented by the formula (1), an acid anhydride thereof, or a salt thereof, each relative to 100 mol% of barium atoms in the barium compound, satisfy the following expressions (I) and (II) as described above. A fine barium carbonate with a small aspect ratio can be efficiently produced with smaller amounts of citric acid and/or a salt thereof and a polybasic carboxylic acid represented by the formula (1) or the like when the citric acid and/or a salt thereof and the polybasic carboxylic acid represented by the formula (1) or the like are used in amounts satisfying the expressions (I) and (II).

$$6.0 \leq A + B \leq 16 \quad (I)$$

$$0.01 \leq A/B \leq 7.0 \quad (II)$$

When a total (A + B) of the mol% A of the added (a) citric acid and/or a salt thereof and the mol% B of the added (c) polybasic carboxylic acid represented by the formula (1) or the like, each relative to 100 mol% of barium atoms in the barium compound, is less than 6.0, the size or shape of particles cannot be controlled. Thus, the particles tend to grow during the reaction. When a total (A + B) of the mol% A of the added (a) citric acid and/or a salt thereof and the mol% B of the added (c) polybasic carboxylic acid represented by the formula (1) or the like, each relative to 100 mol% of barium atoms in the barium compound, is more than 16, the particle shape-controlling effect may not be commensurate with the added amounts and saturated. Further addition merely increases the production cost and is thus not preferred. The lower limit of the total (A + B) of the mol% A of the added (a) citric acid and/or a salt thereof and the mol% B of the added (c) polybasic carboxylic acid represented by the formula (1) or the like, each relative to 100 mol% of barium atoms in the barium compound, is more preferably 7.0 or more, still more preferably 8.0 or more. The upper limit is more preferably 14.0 or less, still more preferably 13.0 or less.

When the ratio (A/B) of the mol% A of the added (a) citric acid and/or a salt thereof to the mol% B of the added (c) polybasic carboxylic acid represented by the formula (1) or the like, each relative to 100 mol% of barium atoms in the barium compound, is lower than 0.01, the size or shape of particles cannot be controlled. Thus, the particles tend to grow during the reaction. When the ratio (A/B) of the mol% A of the added (a) citric acid and/or a salt thereof to the mol% B of the added (c) polybasic carboxylic acid represented by the formula (1) or the like, each relative to 100 mol% of barium atoms in the barium compound, is higher than 7.0, the relative proportion of the added polybasic carboxylic acid or the like decreases, so that the particle shape-controlling effect is reduced.

The lower limit of the ratio (A/B) of the mol% A of the added (a) citric acid and/or a salt thereof to the mol% B of the added (c) polybasic carboxylic acid represented by the formula (1) or the like, each relative to 100 mol% of barium atoms in the barium compound, is more preferably 0.2 or higher, still more preferably 0.5 or higher. The upper limit is more preferably 6.0 or lower, still more preferably 5.0 or lower.

The method for producing barium carbonate of the present invention includes the three steps (a) to (c). Preferably, carbon dioxide and/or a carbonate compound are/is added after the citric acid and/or a salt thereof and the polybasic carboxylic acid represented by the formula (1) or the like are added to the barium compound. In other words, step (b) is preferably performed after steps (a) and (c). When the steps are performed in this order, a finer barium carbonate with a smaller aspect ratio can be produced.

The principle for why barium carbonate produced by performing step (c) after steps (a) and (c) is finer and has a smaller aspect ratio is not clear, but is assumed to be derived from the number of carbon atoms (the carbon number of X in the formula (1)) between carboxyl groups in the polybasic carboxylic acid to be added together with the citric acid and/or a salt thereof. Generally, barium carbonate in the absence of coexisting ions forms aragonite-type acicular crystals extending in the C axis direction. Addition of citric acid alone as a habit modifier blocks the crystal growth of barium carbonate after nucleation and increases the degree of supersaturation to give fine particles, but cannot fully inhibit the growth in the C axis direction. If a polybasic carboxylic acid, in which carboxyl groups are close to each other due to a small linkage structure between the carboxyl groups, coexists, it is selectively adsorbed to or forms a complex on specific faces of the crystals growing in the C axis direction to thereby change the surface energy. Consequently, the effects of increasing the nucleation of citric acid and inhibiting the growth in the C axis direction can be obtained. Presumably, the synergistic effects make barium carbonate much finer.

In the method for producing barium carbonate of the present invention, the amount of the (a) citric acid and/or a salt thereof is preferably 0.1 to 9.0 mol% relative to 100 mol% of barium atoms in the barium compound as a raw material for the production of barium carbonate. When the citric acid and/or a salt thereof are/is used in such a ratio, a finer barium carbonate with a smaller aspect ratio can be produced. When the amount of the citric acid and/or a salt thereof relative to 100 mol% of barium atoms in the barium compound as a raw material for the production of barium carbonate is less than 0.1 mol%, the size or shape of particles cannot be controlled. Thus, the particles tend to grow during the reaction. When the amount of the citric acid and/or a salt thereof relative to 100 mol% of barium atoms in the barium compound as a raw material for the production of barium carbonate is more than 9.0 mol%, the particle shape-controlling effect may not be commensurate with the added amount and saturated. Further addition merely increases the production cost and is thus not preferred. The amount of the citric acid and/or a salt thereof relative to 100 mol% of barium atoms in the barium compound is more preferably 3.0 to 8.8 mol%, still more preferably 4.0 to 8.5 mol%.

In the method for producing barium carbonate of the present invention, the amount of the (c) polybasic carboxylic acid represented by the formula (1) or the like relative to 100 mol% of barium atoms in the barium compound used as a raw material for the production of the barium carbonate is preferably 1.10 to 9.90 mol%. When the polybasic carboxylic acid represented by the formula (1) or the like is used in such a ratio, a finer barium carbonate with a smaller aspect ratio can be produced. When the amount of the polybasic carboxylic acid represented by the formula (1) or the like relative to 100 mol% of barium atoms in the barium compound is less than 1.10 mol%, the size or shape of particles cannot be controlled. Thus, the particles tend to grow during the reaction. When the amount of the polybasic carboxylic acid represented by the formula (1) or the like relative to 100 mol% of barium atoms in the barium compound is more than 9.90 mol%, the particle shape-controlling effect may not be commensurate with the added amount and saturated. Further addition merely increases the production cost and is thus not preferred. The amount of the polybasic carboxylic acid represented by the formula (1) or the like relative to 100 mol% of barium atoms in the barium compound is more preferably 1.25 to 8.00 mol%, still more preferably 2.00 to 6.5 mol%.

The barium raw material used in the method for producing barium carbonate of the present invention is at least one barium compound selected from the group consisting of barium hydroxide, barium chloride, barium nitrate, barium acetate, or barium oxide, which are water-soluble barium compounds. Preferred among these is barium hydroxide or barium oxide whose aqueous solution is basic, more preferably barium hydroxide. Generally known examples of the barium hydroxide include anhydrous barium hydroxide, barium hydroxide monohydrate, and barium hydroxide octahydrate. Any of anhydrous barium hydroxide and barium hydroxide hydrates may be used. Commercial barium hydroxide is generally barium hydroxide monohydrate or barium hydroxide octahydrate. The barium hydroxide may be used in the form of a solution such as an aqueous barium hydroxide solution.

The polybasic carboxylic acid represented by the formula (1) in the method for producing barium carbonate of the present invention may be any compound having the structure of the formula (1) but is preferably any of tartaric acid, succinic acid, malic acid, maleic acid, malonic acid, and trimellitic acid. Among these, any one of tartaric acid, trimellitic acid, malic acid, and maleic acid is more preferred, and any of tartaric acid and trimellitic acid is still more preferred.

In the method for producing barium carbonate of the present invention, a step (b) of reacting with carbon dioxide and/or a carbonate compound is performed by allowing the carbon dioxide and/or carbonate compound to contact a reaction raw material including the barium compound. Any carbonate compound may be used, and examples thereof include ammonium carbonate, ammonium hydrogen carbonate, sodium carbonate, potassium carbonate, and magnesium carbonate.

In the case of reacting carbon dioxide, the reaction raw material including the barium compound is made to contact carbon dioxide. Preferably, a solvent is added to the reaction raw material including the barium compound to prepare a raw material solution, and then the raw material solution is mixed with carbon dioxide.

The solvent in this case is any aqueous medium and may be water or a mixture of water and a water-soluble organic solvent (e.g., methanol, ethanol, or acetone), preferably water. Namely, a reaction caused by mixing an aqueous solution of the reaction raw material including the barium compound with carbon dioxide is one of preferred embodiments of the step (b) of reacting with carbon dioxide and/or a carbonate compound in the present invention.

In the case of a reaction caused by mixing an aqueous solution of the reaction raw material including the barium compound with carbon dioxide, to obtain fine particulate barium carbonate, the reaction is preferably caused by mixing an aqueous solution of the reaction raw material with carbon dioxide while adjusting the pH of the aqueous solution to 12 or lower. The mixing is more preferably performed while adjusting the pH of the aqueous solution of the reaction raw material to pH 8 or lower, still more preferably pH 7 or lower. The aqueous solution of the reaction raw material having been mixed and reacted with carbon dioxide usually has pH 5 or higher.

In the case of a reaction caused by mixing an aqueous solution of the reaction raw material including the barium compound with carbon dioxide, any reaction method causing the reaction may be used. The reaction may be caused by sucking an aqueous solution of the reaction raw material and carbon dioxide into a pump. In this method, the aqueous solution of the reaction raw material and carbon dioxide are sufficiently mixed in the pump, so that the reaction sufficiently proceeds. Moreover, when a plurality of pumps connected in series are used to stepwise cause the reaction, the reaction can more sufficiently proceed, and also a large amount of barium carbonate can be efficiently produced. This technique is suitable for industrial production. The step (b) in the present invention performed with a pump reaction caused by sucking an aqueous solution of the reaction raw material and carbon dioxide into a pump to allow the reaction to proceed in the pump is one of preferred embodiments of the present invention.

In the case of using a carbonate compound in the step (b) of reacting with carbon dioxide and/or a carbonate compound, the reaction raw material including the barium compound is made in contact with the carbonate compound. Preferably, a solvent is added to the reaction raw material including the barium compound to prepare a raw material solution, and then the raw material solution is mixed with the carbonate compound. The solvent is preferably any of those mentioned above.

In the case of using both carbon dioxide and a carbonate compound, preferably the raw material solution is mixed with carbon dioxide and the carbonate compound.

In the case of using a carbonate compound in the step (b) of reacting with carbon dioxide and/or a carbonate compound, the amount of the carbonate compound is preferably one mole or more per mole of barium atoms in the barium compound to be reacted. When the carbonate compound is used in such a ratio, the reaction can sufficiently proceed. The amount is more preferably 1.2 moles or more. From the standpoint of economic efficiency, the amount is preferably 1.6 moles or less.

In the case of using both carbon dioxide and a carbonate compound, a total of the number of moles of the carbon dioxide and the number of moles of the carbonate compound per mole of barium atoms in the barium compound is preferably the same as described above.

The step (b) of reacting with carbon dioxide and/or a carbonate compound may be performed at any temperature, for example, preferably at 10°C to 70°C. The reaction between the reaction raw material including the barium compound and carbon dioxide and/or a carbonate compound sufficiently proceeds at such a temperature. The reaction temperature is more preferably 15°C to 50°C, still more preferably 20°C to 40°C.

The method for producing barium carbonate of the present invention includes the three steps (a) to (c) and may include other steps. Examples of other steps include purification, drying, and grinding of the prepared barium carbonate.

Purification of the barium carbonate may be performed by filtration, water washing, or the like.

Drying of the barium carbonate is performed at a drying temperature of preferably 60°C to 200°C, more preferably 80°C to 130°C.

2. Barium carbonate composition

The method for producing barium carbonate of the present invention provides a composition containing fine barium carbonate with a small aspect ratio, an unreacted citric acid and/or a salt thereof, a polybasic carboxylic acid represented by the formula (1), and the like.

Such a composition is also one aspect of the present invention. Specifically, the composition contains barium carbonate, citric acid and/or a salt thereof, and at least one selected from a polybasic carboxylic acid, an acid anhydride thereof, or a salt thereof. The polybasic carboxylic acid is represented by the following formula (1) :

$$HOOC\text{-}X\text{-}(COOH)_n \qquad (1)$$

wherein X is a divalent or trivalent linking group, the linking group being a C1 or C2 saturated hydrocarbon group, a C2 unsaturated hydrocarbon group, or a group derived from a benzene ring, each optionally containing a hydroxy group as a substituent; and n is 1 or 2. The barium carbonate has a specific surface area determined by the BET method of larger than 45 m$^2$/g and has a particle aspect ratio of 1 to 1.50.

The barium carbonate has a specific surface area determined by the BET method of preferably not smaller than 50 m$^2$/g, more preferably not smaller than 60 m$^2$/g, still more preferably not smaller than 80 m$^2$/g.

The barium carbonate has a particle aspect ratio of 1 to 1.35, more preferably 1 to 1.30.

The specific surface area determined by the BET method and the aspect ratio of the particles of the barium carbonate can be confirmed by the methods described later in EXAMPLES.

In the barium carbonate composition of the present invention, a ratio of a total of the number of moles of the citric acid and/or a salt thereof and the number of moles of the at least one selected from a polybasic carboxylic acid represented by the formula (1), an acid hydride thereof, or a salt thereof relative to the number of moles of barium atoms in the barium carbonate composition is preferably 6.0 to 16.0 mol%.

When a composition is produced by the method for producing barium carbonate of the present invention using the citric acid and/or a salt thereof and at least one of a polybasic carboxylic acid represented by the formula (1), an acid hydride thereof, or a salt thereof in amounts within the optimal ranges relative to the amount of the barium compound as a raw material, the composition satisfies the above-mentioned ratio. Namely, a composition satisfying the ratio contains very fine barium carbonate with a small aspect ratio.

The ratio is preferably 7.0 to 14.0, more preferably 8.0 to 13.0.

The barium carbonate composition of the present invention may contain other components in addition to the barium carbonate, the citric acid and/or a salt thereof, and at least one of the polybasic carboxylic acid represented by the formula (1), an acid hydride thereof, or a salt thereof which are contained in the barium carbonate composition. Examples of other components include a solvent and an antiadhesive agent.

Examples of the solvent include the above-mentioned solvents usable in the method for producing barium carbonate of the present invention.

Examples of the antiadhesive agent include polar solvents such as propylene glycol.

A barium carbonate produced by the method for producing barium carbonate of the present invention includes fine barium carbonate with a small aspect ratio. Such barium carbonate can be used in various applications including materials such as optical glass, glazes, ferrite, pigments, dyes, and fluorescent materials. The barium carbonate in the present invention is fine, has a small aspect ratio, and is excellent in cracking properties. It is thus suitably used as an electronic material of ceramic capacitors in electronic devices, an air electrode material of solid oxide fuel cells, and an oxide superconductor material, for example.

EXAMPLES

Specific examples are provided below to describe the present invention in detail, but the present invention is not limited to these examples. The "%" and "wt%" mean "% by weight (% by mass)" unless otherwise specified. The physical properties were measured as described below.

Measurements were conducted as follows.

<Electron microscopic observation>

Particles were observed using a transmission electron microscope photograph (Jeol Ltd., JEM-2100).

<Measurement of BET specific surface area>

The specific surface area (%) was measured using a fully automatic BET specific surface area meter, Macsorb Model HM-1200 (Mountech).

<Measurement of aspect ratio>

One thousand particles were randomly selected in the electron micrograph. The ratio between the major axis and the minor axis of each particle was measured, and an average of the ratios of the particles was determined as an aspect ratio.

(Example 1)

Barium hydroxide octahydrate was dissolved in pure water. To the solution were added an aqueous solution of citric acid monohydrate (Wako Pure Chemical Industries, Ltd.) and an aqueous solution of tartaric acid (Wako Pure Chemical Industries, Ltd.) in an amount of 2.5 mol% and an amount of 5 mol%, respectively, relative to the amount of barium ions in the barium hydroxide.

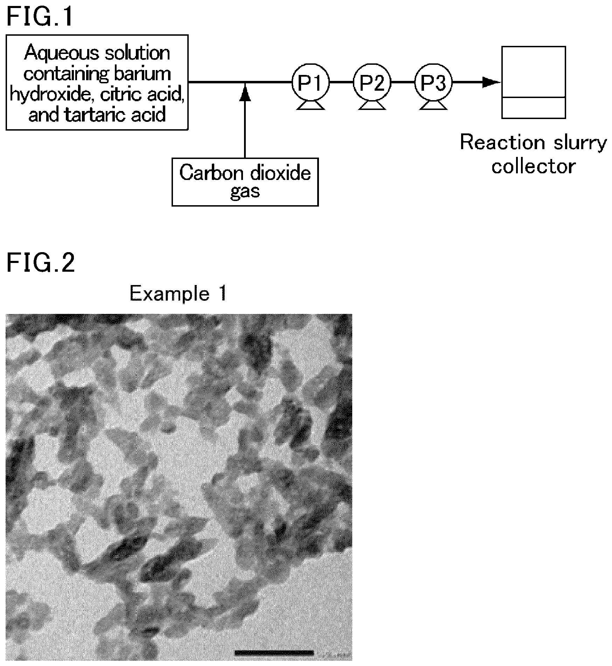

Next, the solution mixture was diluted with pure water so that the concentration of the barium hydroxide octahydrate in the dilution reached 72.5 g/L, thereby preparing an aqueous solution containing barium hydroxide, citric acid, and tartaric acid (raw material A). The liquid temperature was adjusted to 32°C. The raw material A was fed to a reactor shown in Fig. 1 from an inlet of a pump P1 at a flow rate of 400 mL/min. At the same time, carbon dioxide gas was blown at a rate of 4.2 L/min into the passway of the raw material A to the pump P1 while adjusting the pH to 6.0 to 7.0, thereby causing a reaction. The reactor included three connected magnet pumps P1 and P2 (Iwaki Co., Ltd., MD-10K-N) and pump P3 (Iwaki Co., Ltd., MD-15R-N) as shown in Fig. 1.

First drops at the beginning of the reaction were discarded for one minute, and a reaction slurry was collected. The slurry was immediately filtered and washed with water, and the resulting water-containing cake was dried at 100°C. The dried cake was pulverized with a pulverizer to obtain particulate barium carbonate. The BET value (BET specific surface area) and aspect ratio of the particulate barium carbonate are indicated in Table 2, and an electron micrograph thereof is shown in Fig. 2.

(Example 2)

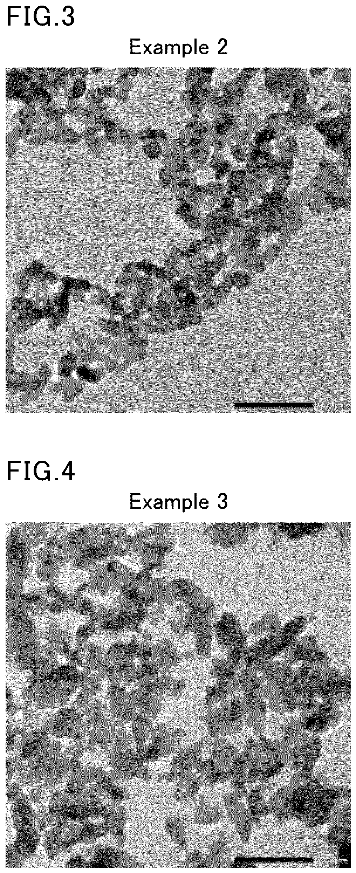

An experiment was performed as in Example 1, except that the amount of the tartaric acid was changed from 5.0 mol% to 7.5 mol%. Table 1 shows the result. The electron micrograph is shown in Fig. 3.

(Example 3)

An experiment was performed as in Example 1, except that the amount of the citric acid was changed from 2.5 mol% to 5.0 mol%, and the amount of the tartaric acid was changed from 5.0 mol% to 2.5 mol%. Table 1 shows the result. The electron micrograph is shown in Fig. 4.

(Example 4)

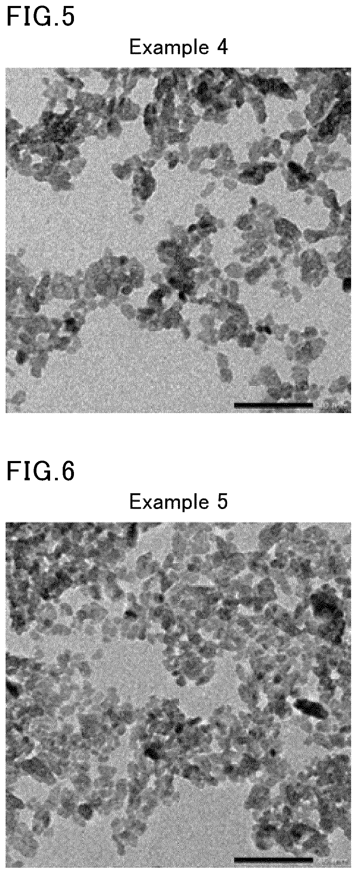

An experiment was performed as in Example 1, except that the amount of the citric acid was changed from 2.5 mol% to 5.0 mol%. Table 1 shows the result. The electron micrograph is shown in Fig. 5.

(Example 5)

An experiment was performed as in Example 1, except that the amount of the citric acid was changed from 2.5 mol% to 7.5 mol%, and the amount of the tartaric acid was changed from 5.0 mol% to 2.5 mol%. Table 1 shows the result. The electron micrograph is shown in Fig. 6.

(Example 6)

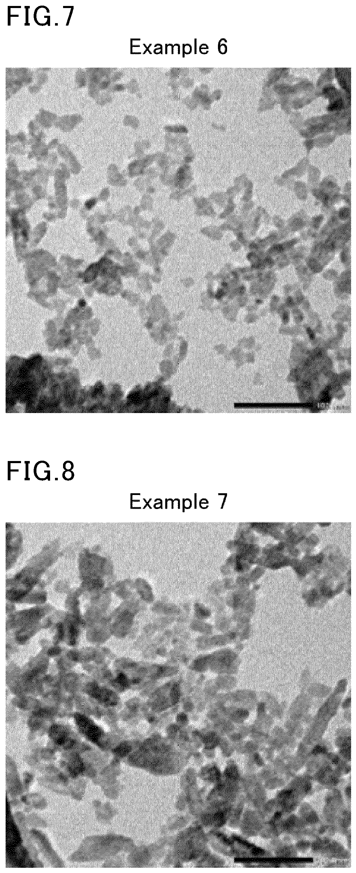

An experiment was performed as in Example 1, except that the amount of the citric acid was changed from 2.5 mol% to 2.4 mol%, and the amount of the tartaric acid was changed from 5.0 mol% to 3.9 mol%. Table 1 shows the result. The electron micrograph is shown in Fig. 7.

(Example 7)

An experiment was performed as in Example 1, except that the amount of the citric acid was changed from 2.5 mol% to 8.75 mol%, and the amount of the tartaric acid was changed from 5.0 mol% to 1.25 mol%. Table 1 shows the result. The electron micrograph is shown in Fig. 8.

(Example 8)

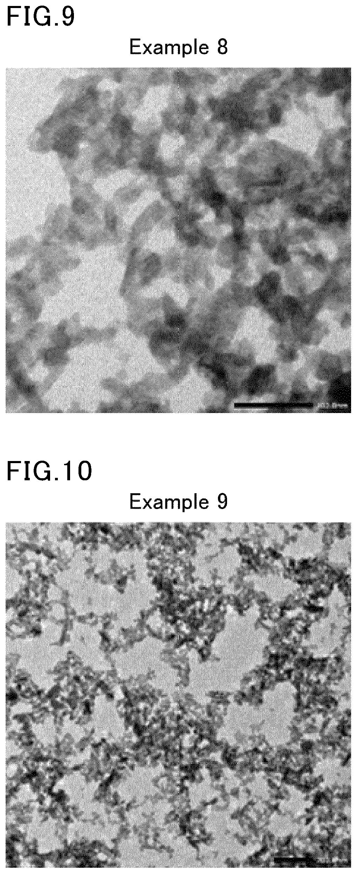

An experiment was performed as in Example 1, except that the amount of the citric acid was changed from 2.5 mol% to 0.10 mol%, and the amount of the tartaric acid was changed from 5.0 mol% to 9.90 mol%. Table 2 shows the result. The electron micrograph is shown in Fig. 9.

(Example 9)

An experiment was performed as in Example 4, except that the tartaric acid was changed to trimellitic acid anhydride. Table 2 shows the result. The electron micrograph is shown in Fig. 10.

(Example 10)

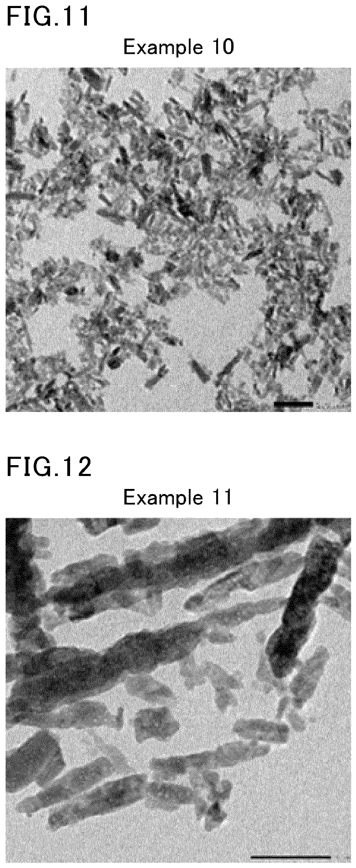

An experiment was performed as in Example 4, except that the tartaric acid was changed to maleic acid. Table 2 shows the result. The electron micrograph is shown in Fig. 11.

(Example 11)

An experiment was performed as in Example 4, except that the tartaric acid was changed to malic acid. Table 2 shows the result. The electron micrograph is shown in Fig. 12.

(Example 12)

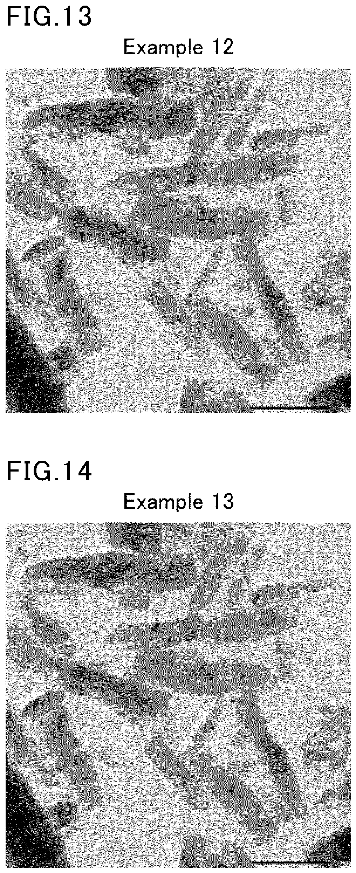

An experiment was performed as in Example 1, except that the amount of the citric acid was changed from 2.5 mol% to 4.7 mol%, and the 5.0 mol% of tartaric acid was changed to 5.0 mol% of succinic acid. Table 2 shows the result. The electron micrograph is shown in Fig. 13.

(Example 13)

An experiment was performed as in Example 1, except that the amount of the citric acid was changed from 2.5 mol% to 4.7 mol%, and the 5.0 mol% of tartaric acid was changed to 5.7 mol% of malonic acid. Table 2 shows the result. The electron micrograph is shown in Fig. 14.

(Example 14)

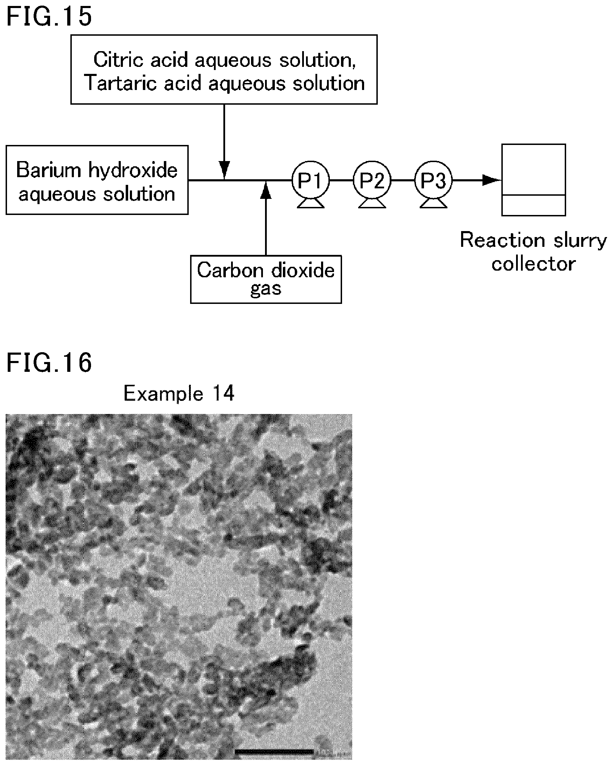

In view of the result in Example 1, a scale-up experiment was performed. The reactor included three connected pumps P1, P2, and P3 as shown in Fig. 15. Specifications of the pumps are as follows.

> (a) First pump P1: centrifugal pump (Yokota Manufacturing Co., Ltd.), suction inlet aperture 50 mm, ejection outlet aperture 40 mm, ejection rate 300 L/min, impeller rotation speed 3490 rpm
> (b) Second pump P2: centrifugal pump (Nishigaki Pump Mfg. Co., Ltd.), suction inlet aperture 25 mm, ejection outlet aperture 25 mm, ejection rate 60 L/min, impeller rotation speed 3600 rpm
> (c) Third pump P3: centrifugal pump (Nishigaki Pump Mfg. Co., Ltd.), suction inlet aperture 25 mm, ejection outlet aperture 25 mm, ejection rate 60 L/min, impeller rotation speed 3600 rpm

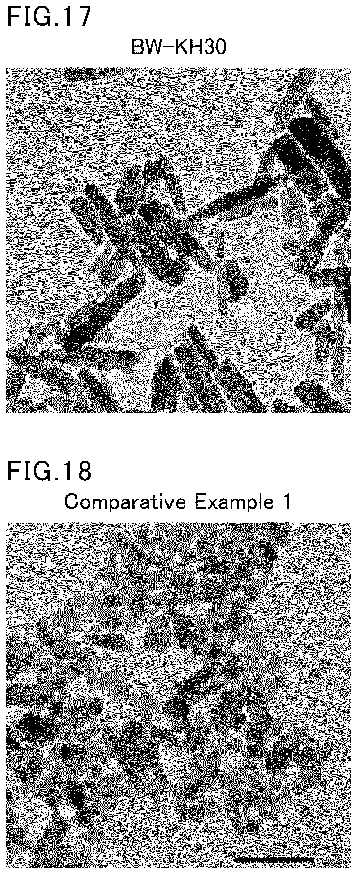

Barium hydroxide octahydrate (63 kg) was dissolved in pure water to prepare 180 L of an aqueous barium hydroxide solution (raw material C). The temperature was adjusted to 32°C.
In a reactor illustrated in Fig. 15, the raw material C was fed at a flow rate of 18 L/min to a suction inlet of the pump P1. At the same time, carbon dioxide gas was blown into the passway of the barium hydroxide to the pump P1 while adjusting the pH to 6.4 to 6.5. A mixed acid aqueous solution containing a citric acid monohydrate and a tartaric acid in amounts of 4.75 mol% and 7.82 mol%, respectively, relative to the amount of the barium hydroxide was added. Thus, a reaction was allowed to continuously proceed in the pumps P1, P2, and P3 to obtain a slurry. The slurry was immediately filtered and washed with water to give a water-containing cake. The cake was dried at 100°C, and the dried cake was pulverized, thereby obtaining particulate barium carbonate.
The data of the BET value and aspect ratio of the particulate barium carbonate are indicated in Tables 2 and 4, and an electron micrograph thereof is shown in Fig. 16. For comparison, the BET value and aspect ratio, and an election micrograph of BW-KH30, which is a commercial barium carbonate available from Sakai Chemical Industry Co., Ltd. are shown Table 4 and Fig. 17.
The concentrations of the residual citric acids and the concentrations of the residual tartaric acids in the produced particulate barium carbonate and the commercial product BW-KH30 were measured by the below-mentioned method. Table 4 shows the result.

<Method for analyzing residual citric acid concentration>

The barium carbonate sample (1 g) was dissolved in 1.5 mL of concentrated hydrochloric acid (special grade). The solution was diluted with distilled water to a total amount of 80 mL. To the diluted solution was added a 10% sodium hydroxide aqueous solution while adjusting the pH to 8. The mixed solution was diluted with distilled water to a total amount of 100 mL, thereby preparing a measurement sample. The amount of the citric acid in the measurement sample was measured in accordance with the method described in the specification of F-Kit, citric acid (J.K. International). The absorbance was measured at a wavelength of 334 nm using an UV/VIS spectrophotometer, V-570 model (Jasco Corporation).

<Method for analyzing residual tartaric acid concentration>

The barium carbonate sample (1 g) was dissolved in 5 mL of 99% acetic acid (special grade). The solution was diluted with distilled water to a total amount of 1 L, thereby preparing a measurement sample. The amount of the tartaric acid in the measurement sample was measured with "ION CHROMATOGRAPH [IC-2001]" available from Tosoh Corporation. The eluent used in the measurement was a sodium carbonate-sodium hydrogen carbonate mixed solution. The sodium carbonate-sodium hydrogen carbonate mixed solution was prepared by dissolving 0.0468 g of a sodium carbonate reagent (special grade) and 0.0636 g of a sodium hydrogen carbonate reagent (special grade) in an appropriate amount of distilled water, and then distilled water was further added to the solution to a total amount of 1 L in a graduated cylinder. The separation column used was TSKgel SuperIC-AZ, and the suppressor gel was TSKsuppress IC-A. The calibration curve was established using test samples having tartaric acid concentrations of 10 ppm, 25 ppm, and 50 ppm which were prepared by dissolving a tartaric acid reagent (special grade) in distilled water.

(Comparative Example 1)

An experiment was performed as in Example 1, except that the amount of the tartaric acid was changed from 5.0 mol% to 2.5 mol%. Table 3 shows the result. The electron micrograph is shown in Fig. 18.

(Comparative Example 2)

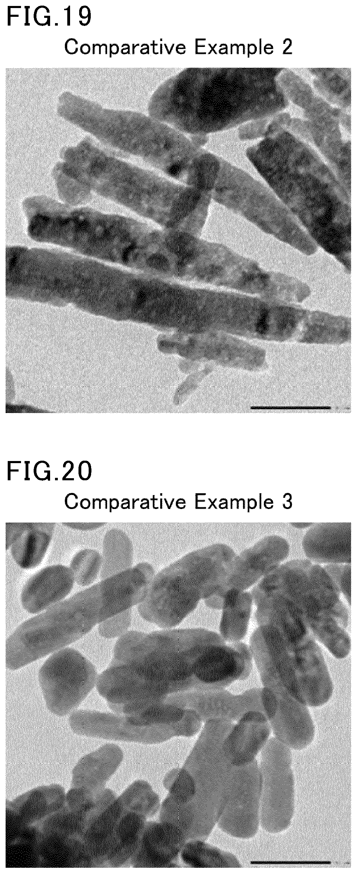

An experiment was performed as in Example 1, except that the amount of the citric acid was changed from 2.5 mol% to 5.0 mol%, and no tartaric acid was added. Table 3 shows the result. The electron micrograph is shown in Fig. 19.

(Comparative Example 3)

An experiment was performed as in Example 1, except that no citric acid was added. Table 3 shows the result. The electron micrograph is shown in Fig. 20.

(Comparative Example 4)

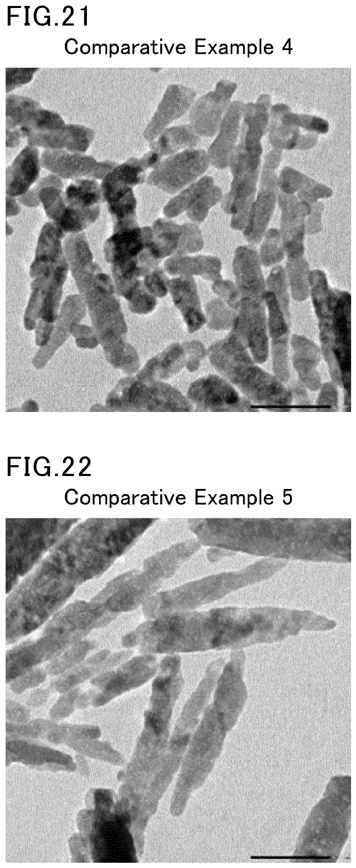

An experiment was performed as in Example 1, except that the amount of the citric acid was changed from 2.5 mol% to 2.4 mol%, and the 5.0 mol% of tartaric acid was changed to 4.5 mol% of glutamic acid. Table 3 shows the result. The electron micrograph is shown in Fig. 21.

(Comparative Example 5)

An experiment was performed as in Example 1, except that the amount of the citric acid was changed from 2.5 mol% to 2.4 mol%, and the 5.0 mol% of tartaric acid was changed to 4.7 mol% of oxalic acid. Table 3 shows the result. The electron micrograph is shown in Fig. 22.

(Comparative Example 6)

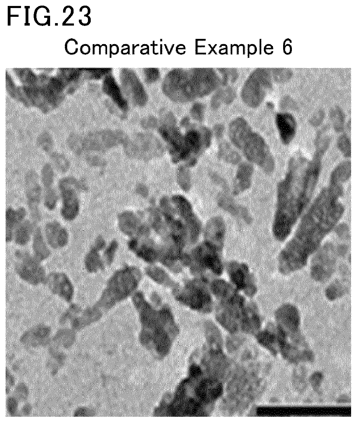

An experiment was performed as in Example 1, except that the amount of the citric acid was changed from 2.5 mol% to 2.4 mol%, and the 5.0 mol% of tartaric acid was changed to 4.7 mol% of gluconic acid. Table 3 shows the result. The electron micrograph is shown in Fig. 23.

(Comparative Example 7)

An experiment was performed as in Example 1, except that the amount of the citric acid was changed from 2.5 mol% to 9.0 mol%, and the amount of the tartaric acid was changed from 5.0 mol% to 1.0 mol%. Table 3 shows the result.

[Table 1]

| | | Example 1 | Example 2 | Example 3 | Example 4 | Example 5 | Example 6 | Example 7 |
|---|---|---|---|---|---|---|---|---|
| Citric acid (mol%) | | 2.50 | 2.50 | 5.00 | 5.00 | 7.50 | 2.40 | 8.75 |
| Co-additive | Component | Tartaric acid | Tartaric acid | Tartaric acid | Tartaric acid | Tartaric acid | Tartaric acid | Tartaric acid |
| | Amount (mol%) | 5.00 | 7.50 | 2.50 | 5.00 | 2.50 | 3.90 | 1.25 |
| Total amount (mol%) | | 7.50 | 10.00 | 7.50 | 10.00 | 10.00 | 6.30 | 10.00 |
| Citric acid/Co-additive component | | 0.5 | 0.3 | 2.0 | 1.0 | 3.0 | 0.62 | 7.0 |
| BET value ($m^2/g$) | | 50 | 52 | 54 | 65 | 65 | 47 | 59 |
| Aspect ratio | | 1.34 | 1.39 | 1.26 | 1.40 | 1.33 | 1.39 | - |

[Table 2]

| | | Example 8 | Example 9 | Example 10 | Example 11 | Example 12 | Example 13 | Example 14 |
|---|---|---|---|---|---|---|---|---|
| Citric acid (mol%) | | 0.10 | 5.00 | 5.00 | 5.00 | 4.70 | 4.70 | 4.75 |
| Co-additive | Component | Tartaric acid | Trimellitic anhydride | Maleic acid | Malic acid | Succinic acid | Malonic acid | Tartaric acid |
| | Amount (mol%) | 9.90 | 5.00 | 5.00 | 5.00 | 5.00 | 5.70 | 7.82 |
| Total amount (mol%) | | 10.00 | 10.00 | 10.00 | 10.00 | 9.70 | 11.40 | 12.57 |
| Citric acid/Co-additive component | | 0.01 | 1.0 | 1.0 | 1.0 | 0.94 | 0.82 | 0.61 |
| BET value ($m^2/g$) | | 51 | 62 | 56 | 54 | 52 | 50 | 81 |
| Aspect ratio | | - | 1.34 | 1.47 | 1.36 | 1.40 | 1.48 | 1.30 |

[Table 3]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Citric acid (mol%) | | 2.50 | 5.00 | - | 2.40 | 2.40 | 2.40 | 9.00 |
| Co-additive | Component | Tartaric acid | - | Tartaric acid | Glutamic acid | Oxalic acid | Gluconic acid | Tartaric acid |
| | Amount (mol%) | 2.50 | - | 5.00 | 4.50 | 4.70 | 4.70 | 1.00 |
| Total amount (mol%) | | 5.00 | 5.00 | 5.00 | 6.90 | 7.10 | 7.10 | 10.00 |
| Citric acid/Co-additive component | | 1.00 | - | 0 | 0.53 | 0.51 | 0.51 | 9.0 |
| BET value (m$^2$/g) | | 39 | 29 | 22 | 40 | 34 | 38 | 43 |
| Aspect ratio | | 1.37 | - | - | - | - | - | - |

EP 3 786 115 B1

[Table 4]

| Specimen | Example 14 | BW-KH30 (Sakai Chemical Industry Co., Ltd. ) |
|---|---|---|
| BET value ($m^2/g$) | 81 | 31 |
| Aspect ratio | 1.30 | 4.00 |
| Residual citric acid concentration (wt%) | 4.0 | 2.0 |
| Residual tartaric acid concentration (wt%) | 2.5 | N/A |

All the barium carbonates obtained in Examples 1 to 14 were fine and had a specific surface area of larger than 45 $m^2/g$. The amount of the co-additive such as tartaric acid was smaller in the production method in any of Examples 1 to 14 than the amount of gluconic acid and/or a derivative thereof in a conventional method using gluconic acid and/or a derivative thereof. In addition, the amount of waste liquid is also small in the examples. It is thus demonstrated that fine barium carbonate having a specific surface area of larger than 45 $m^2/g$ can be economically produced with little burden on the environment by the method for producing barium carbonate of the present invention. The result in Example 14 demonstrates that the method for producing barium carbonate of the present invention is suitable for industrial-level production of barium carbonate.

The barium carbonate obtained in any of the comparative examples has a smaller specific surface area than those in the examples. The barium carbonate had an acicular particle shape with a high aspect ratio like BE-KH30 which is a commercial product available from Sakai Chemical Industry Co., Ltd. as shown in the electron micrograph.

The comparison between Examples 1 to 14 and Comparative Examples 1 to 7 revealed that fine barium carbonate can be produced by using a combination of citric acid and/or a salt thereof and a polybasic carboxylic acid represented by the formula (1) in the specific ratio.

## Claims

1. A method for producing barium carbonate, comprising:

    (a) adding citric acid and/or a salt thereof to at least one barium compound selected from the group consisting of barium hydroxide, barium chloride, barium nitrate, barium acetate, or barium oxide;
    (b) reacting with carbon dioxide and/or a carbonate compound; and
    (c) adding at least one selected from a polybasic carboxylic acid, an acid anhydride thereof, or a salt thereof, the polybasic carboxylic acid being represented by the following formula (1):

    $$HOOC-X-(COOH)_n \qquad (1)$$

    wherein X is a divalent or trivalent linking group, the linking group being a C1 or C2 saturated hydrocarbon group, a C2 unsaturated hydrocarbon group, or a group derived from a benzene ring, each optionally containing a hydroxy group as a substituent; and n is 1 or 2,

    a mol% A of the added (a) citric acid and/or a salt thereof and a mol% B of the added (c) at least one selected from a polybasic carboxylic acid represented by the formula (1), an acid anhydride thereof, or a salt thereof, each relative to 100 mol% of barium atoms in the barium compound, satisfying the following expressions (I) and (II):

    $$6.0 \leq A + B \leq 16 \quad (I)$$

    $$0.01 \leq A/B \leq 7.0 \quad (II).$$

2. The method for producing barium carbonate according to claim 1,
    wherein the amount of the (a) citric acid and/or a salt thereof relative to 100 mol% of barium atoms in the barium compound is 0.1 to 9.0 mol%.

3. The method for producing barium carbonate according to claim 1 or 2,

14

wherein the (b) carbon dioxide and/or a carbonate compound are/is added after the (a) citric acid and/or a salt thereof and the (c) at least one selected from a polybasic carboxylic acid represented by the formula (1), an acid anhydride thereof, or a salt thereof are added to the barium compound.

4. The method for producing barium carbonate according to any one of claims 1 to 3,
wherein the barium compound is barium hydroxide.

5. The method for producing barium carbonate according to any one of claims 1 to 4,
wherein the polybasic carboxylic acid represented by the formula (1) is any of tartaric acid, succinic acid, malic acid, maleic acid, malonic acid, and trimellitic acid.

6. A barium carbonate composition comprising:

barium carbonate;
citric acid and/or a salt thereof; and
at least one selected from a polybasic carboxylic acid, an acid anhydride thereof, or a salt thereof, the polybasic carboxylic acid being represented by the following formula (1):

$$HOOC-X-(COOH)_n \qquad (1)$$

wherein X is a divalent or trivalent linking group, the linking group being a C1 or C2 saturated hydrocarbon group, a C2 unsaturated hydrocarbon group, or a group derived from a benzene ring, each optionally containing a hydroxy group as a substituent; and n is 1 or 2,
the barium carbonate having a specific surface area determined by the BET method of larger than 45 $m^2/g$ and having a particle aspect ratio of 1 to 1.50.

7. The barium carbonate composition according to claim 6,
wherein a ratio of a total of a number of moles of the citric acid and/or a salt thereof and a number of moles of the at least one selected from a polybasic carboxylic acid represented by the formula (1), an acid hydride thereof, or a salt thereof relative to a number of moles of barium atoms in the barium carbonate composition is 6.0 to 16.0 mol%.

**Patentansprüche**

1. Verfahren zur Herstellung von Bariumcarbonat, umfassend:

(a) Zugeben von Zitronensäure und/oder einem Salz davon zu mindestens einer Bariumverbindung, die aus der aus Bariumhydroxid, Bariumchlorid, Bariumnitrat, Bariumacetat oder Bariumoxid bestehenden Gruppe ausgewählt ist,
(b) Reagieren mit Kohlendioxid und/oder einer Carbonatverbindung und
(c) Zugeben von wenigstens einem, das aus einer mehrbasischen Carbonsäure, einem Säureanhydrid davon oder einem Salz davon ausgewählt ist, wobei die mehrbasische Carbonsäure durch die folgende Formel (1) dargestellt ist:

$$HOOC-X-(COOH)_n \qquad (1)$$

wobei X eine zweiwertige oder dreiwertige Verbindungsgruppe ist, wobei die Verbindungsgruppe eine gesättigte C1- oder C2-Kohlenwasserstoffgruppe, eine ungesättigte C2-Kohlenwasserstoffgruppe oder eine Gruppe ist, die von einem Benzolring abgeleitet ist, wobei jede optional eine Hydroxygruppe als Substituenten enthält, und n 1 oder 2 ist,

wobei ein Mol-% A der zugegebenen (a) Zitronensäure und/oder eines Salzes davon und ein Mol-% B des zugegebenen (c) wenigstens einen, das aus einer durch die Formel (1) dargestellten mehrbasischen Carbonsäure, einem Säureanhydrid davon oder einem Salz davon ausgewählt ist, jeweils bezogen auf 100 Mol-% der Bariumatome in der Bariumverbindung die folgenden Ausdrücke (I) und (II) erfüllen:

$$6{,}0 \leq A + B \leq 16 \qquad (I)$$

$$0{,}01 \leq A/B \leq 7{,}0 \qquad \text{(II)}.$$

**2.** Verfahren zur Herstellung von Bariumcarbonat nach Anspruch 1,
wobei die Menge der (a) Zitronensäure und/oder eines Salzes davon bezogen auf 100 Mol-% der Bariumatome in der Bariumverbindung 0,1 bis 9,0 Mol-% beträgt.

**3.** Verfahren zur Herstellung von Bariumcarbonat nach Anspruch 1 oder 2,
wobei das (b) Kohlendioxid und/oder eine Carbonatverbindung zugegeben werden/wird, nachdem die (a) Zitronensäure und/oder ein Salz davon und das (c) wenigstens eine, das aus einer durch die Formel (1) dargestellten mehrbasischen Carbonsäure, einem Säureanhydrid davon oder einem Salz davon ausgewählt ist, zu der Bariumverbindung zugegeben werden.

**4.** Verfahren zur Herstellung von Bariumcarbonat nach einem der Ansprüche 1 bis 3,
wobei die Bariumverbindung Bariumhydroxid ist.

**5.** Verfahren zur Herstellung von Bariumcarbonat nach einem der Ansprüche 1 bis 4,
wobei die durch die Formel (1) dargestellte mehrbasische Carbonsäure eine beliebige von Weinsäure, Bernsteinsäure, Äpfelsäure, Maleinsäure, Malonsäure und Trimellitsäure ist.

**6.** Bariumcarbonatzusammensetzung, umfassend:

Bariumcarbonat,
Zitronensäure und/oder ein Salz davon und
wenigstens eines, das aus einer mehrbasischen Carbonsäure, einem Säureanhydrid davon oder einem Salz davon ausgewählt ist, wobei die mehrbasische Carbonsäure durch die folgende Formel (1) dargestellt ist:

$$\text{HOOC-X-(COOH)}_n \qquad (1)$$

wobei X eine zweiwertige oder dreiwertige Verbindungsgruppe ist, wobei die Verbindungsgruppe eine gesättigte C1- oder C2-Kohlenwasserstoffgruppe, eine ungesättigte C2-Kohlenwasserstoffgruppe oder eine Gruppe ist, die von einem Benzolring abgeleitet ist, wobei jede optional eine Hydroxygruppe als einen Substituenten enthält, und n 1 oder 2 ist,
wobei das Bariumcarbonat eine durch das BET-Verfahren bestimmte spezifische Oberfläche von mehr als 45 $m^2$/g und ein Teilchenseitenverhältnis von 1 bis 1,50 aufweist.

**7.** Bariumcarbonatzusammensetzung nach Anspruch 6,
wobei ein Verhältnis von einer Summe einer Molanzahl der Zitronensäure und/oder eines Salzes davon und einer Molanzahl des wenigstens einen, das aus einer durch die Formel (1) dargestellten mehrbasischen Carbonsäure, einem Säureanhydrid davon oder einem Salz davon ausgewählt ist, bezogen auf eine Molanzahl von Bariumatomen in der Bariumcarbonatzusammensetzung 6,0 bis 16,0 Mol-% beträgt.

**Revendications**

**1.** Procédé pour la production de carbonate de baryum, comprenant :

(a) l'addition d'acide citrique et/ou d'un sel de celui-ci à au moins un composé de baryum choisi dans le groupe consistant en hydroxyde de baryum, chlorure de baryum, nitrate de baryum, acétate de baryum, ou oxyde de baryum ;
(b) la réaction avec du dioxyde de carbone et/ou un composé de carbonate ; et
(c) l'addition d'au moins un choisi parmi un acide carboxylique polyvalent, un anhydride d'acide de celui-ci, ou un sel de celui-ci, l'acide carboxylique polyvalent étant représenté par la formule (1) suivante :

$$\text{HOOC-X-(COOH)}_n \qquad (1)$$

où X est un groupe de liaison divalent ou trivalent, le groupe de liaison étant un groupe hydrocarboné saturé en C1 ou C2, un groupe hydrocarboné insaturé en C2, ou un groupe dérivé d'un noyau benzène, chacun contenant éventuellement un groupe hydroxy comme un substituant ; et n est égal à 1 ou 2,

un % en mole A du (a) acide citrique et/ou un sel de celui-ci ajouté et un % en mole B du (c) au moins un choisi parmi un acide carboxylique polyvalent représenté par la formule (1), un anhydride d'acide de celui-ci, ou un sel de celui-ci ajouté, chacun par rapport à 100 % en mole d'atomes de baryum dans le composé de baryum, satisfaisant les expressions (I) et (II) suivantes :

$$6{,}0 \leq A + B \leq 16 \quad (I)$$

$$0{,}01 \leq A/B \leq 7{,}0 \quad (II)$$

2. Procédé de production de carbonate de baryum selon la revendication 1,
   où la quantité du (a) acide citrique et/ou un sel de celui-ci par rapport à 100 % en mole d'atomes de baryum dans le composé de baryum est de 0,1 à 9,0 % en moles.

3. Procédé pour la production de carbonate de baryum selon la revendication 1 ou 2,
   où le (b) dioxyde de carbone et/ou un composé de carbonate sont/est ajouté(s) après le (a) acide citrique et/ou un sel de celui-ci et le (c) au moins un choisi parmi un acide carboxylique polyvalent représenté par la formule (1), un anhydride d'acide de celui-ci, ou un sel de celui-ci est ajouté au composé de baryum.

4. Procédé pour la production de carbonate de baryum selon l'une quelconque des revendications 1 à 3,
   où le composé de baryum est l'hydroxyde de baryum.

5. Procédé pour la production de carbonate de baryum selon l'une quelconque des revendications 1 à 4,
   où l'acide carboxylique polyvalent représenté par la formule (1) est l'un quelconque d'acide tartarique, acide succinique, acide malique, acide maléique, acide malonique, et acide trimellitique.

6. Composition de carbonate de baryum comprenant :

   du carbonate de baryum ;
   de l'acide citrique et/ou un sel de celui-ci ; et
   au moins un choisi parmi un acide carboxylique polyvalent, un anhydride d'acide de celui-ci, ou un sel de celui-ci, l'acide carboxylique polyvalent étant représenté par la formule (1) suivante :

   $$HOOC\text{-}X\text{-}(COOH)_n \qquad (1)$$

   où X est un groupe de liaison divalent ou trivalent, le groupe de liaison étant un groupe hydrocarboné saturé en C1 ou C2, un groupe hydrocarboné insaturé en C2, ou un groupe dérivé d'un noyau benzène, chacun contenant éventuellement un groupe hydroxy comme un substituant ; et n est égal à 1 ou 2,
   le carbonate de baryum ayant une surface spécifique déterminée par le procédé BET supérieure à 45 $m^2$/g et ayant un rapport des dimensions de particule de 1 à 1,50.

7. Composition de carbonate de baryum selon la revendication 6,
   où un rapport d'un total d'un nombre de moles de l'acide citrique et/ou d'un sel de celui-ci et d'un nombre de moles du au moins un choisi parmi un acide carboxylique polyvalent représenté par la formule (1), un anhydride d'acide de celui-ci, ou un sel de celui-ci par rapport à un nombre de moles d'atomes de baryum dans la composition de carbonate de baryum est de 6,0 à 16,0 % en moles.

# FIG.1

```
┌─────────────────────┐
│ Aqueous solution    │
│ containing barium   │──────────●────(P1)──(P2)──(P3)──►  ┌───────┐
│ hydroxide, citric   │          ▲                         │       │
│ acid, and tartaric  │          │                         ├───────┤
│ acid                │          │                         └───────┘
└─────────────────────┘          │
                        ┌─────────────────┐              Reaction slurry
                        │ Carbon dioxide  │                 collector
                        │      gas        │
                        └─────────────────┘
```

# FIG.2

## Example 1

## FIG.3

Example 2

## FIG.4

Example 3

FIG.5

Example 4

FIG.6

Example 5

# FIG.7

## Example 6

# FIG.8

## Example 7

# FIG.9

## Example 8

# FIG.10

## Example 9

## FIG.11

Example 10

## FIG.12

Example 11

## FIG.13

Example 12

## FIG.14

Example 13

## FIG.15

```
                  ┌─────────────────────────────────┐
                  │   Citric acid aqueous solution, │
                  │  Tartaric acid aqueous solution │
                  └─────────────────────────────────┘
                                  │
                                  ▼
┌──────────────────┐                                              ┌──────────┐
│ Barium hydroxide │────────────┬──────(P1)──(P2)──(P3)──────────▶│          │
│ aqueous solution │            ▲                                 │          │
└──────────────────┘            │                                 └──────────┘
                    ┌───────────────────┐                      Reaction slurry
                    │  Carbon dioxide   │                         collector
                    │       gas         │
                    └───────────────────┘
```

## FIG.16

### Example 14

# FIG.17
## BW-KH30

# FIG.18
## Comparative Example 1

# FIG.19
## Comparative Example 2

# FIG.20
## Comparative Example 3

# FIG.21
### Comparative Example 4

# FIG.22
### Comparative Example 5

## FIG.23
Comparative Example 6

**EP 3 786 115 B1**

**Patent documents cited in the description**

- JP 2015044744 A
- JP 2009114015 A
- WO 2008111612 A